(19)

Europäisches
Patentamt
European
Patent Office
Office européen
des brevets

(11) **EP 3 667 396 A1**

(12) **EUROPEAN PATENT APPLICATION**

(43) Date of publication:
**17.06.2020 Bulletin 2020/25**

(51) Int Cl.:
**G02B 27/01** (2006.01)

(21) Application number: **18275181.8**

(22) Date of filing: **10.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **BRAY, Mark Edgar**
**Chelmsford, Essex CM2 8HN (GB)**

(74) Representative: **BAE SYSTEMS plc**
**Group IP Department**
**Farnborough Aerospace Centre**
**Farnborough**
**Hampshire GU14 6YU (GB)**

(54) **DISPLAY DEVICE**

(57) A display device 10, for example for a head-up display, is described. The display device comprises: a set of electromagnetic radiation (EMR) sources 11, including a first EMR source 11A and a second EMR source 11B, arranged to emit EMR having a set of wavelengths, including a first wavelength $\lambda_1$ and a second wavelength $\lambda_2$, respectively, for example of an image to be displayed; a filter assembly 300 comprising a set of notch filters, including a first notch filter 320 and a second notch filter 340, arranged to respectively reflect the emitted EMR having the set of wavelengths, including the first wavelength $\lambda_1$ and the second wavelength $\lambda_2$, incident thereupon along an optical axis $A$ towards a viewer $V$, for example along a line of sight (LOS) of the viewer; and wherein the filter assembly 300 is arranged to transmit incident external EMR $\lambda_{external}$, for example of an external scene S, having a predetermined wavelength range, therethough along the optical axis $A$ towards the viewer $V$, wherein the external EMR is transmitted, at least in part, through the filter assembly.

Fig. 1

## Description

## Field

The present invention relates to display devices, for example head-up display devices.

## Background to the invention

Head-up displays (also known as head-up display devices, heads-up displays or HUDs) are optically transparent displays that present data thereon, such as navigation information, instrumentation information, viewpoint information and/or augmented reality images, without requiring viewers to look away from their usual viewpoints while allowing the viewers to simultaneously view an external scene through the optically transparent displays. Head-up displays also have the advantage that the viewers' eyes do not need to refocus to view externally, for example outside an aircraft or a vehicle, after looking at optically nearer instrumentation therein. Initially developed for military aviation, head-up displays are now used in commercial aircraft, automobiles, and other applications, both military and civilian. Head-up displays include: fixed mounted head-up displays, for example provided for and/or integrated in a windscreen (also known as windshield) of an aircraft or vehicle; head-mounted displays, for example provided for and/or integrated in lenses of glasses or goggles head-up displays; and/or provided for and/or integrated in visors of helmet-mounted head-up displays. Other head-up displays are known.

Generally, a head-up display comprises a projector out of line of sight (LOS), which transmits an image to be displayed towards a filter or a semi-silvered mirror, which reflects the image into the LOS. The projector's wavelength may be matched to the filter reflection.

However, conventional head-up displays may be monochrome, for example displaying navigation information, instrumentation information, viewpoint information and/or augmented reality images in one colour, typically green. This monochrome display results in a least two problems. Firstly, a visual 'richness' of the displayed image is limited by its monochrome nature. For example, important alerts or warnings cannot be distinguished by a different colour. Secondly, use of a monochrome filter may tint the viewers' perception of the external scene. For example, a strong blue filter may make the external scene appear to have an orange tint, such that some objects in the external scene are imperceptible or poorly distinguished, resulting in increased risk, danger or threat to the viewer.

Further, production of the required monochrome filters may be costly and/or complex. For example, conventional thin film filters typically require vacuum deposition of many layers to achieve a required performance. Furthermore, production of multiple filters on a given substrate may be prohibitively expensive. Additionally, the filters may require a non-flat (i.e. a non-planar) shape, for example to conform with curvatures of windscreens, lenses and/or visors, thereby also increasing production cost and/or complexity.

Hence, there is a need to improve display devices for head-up displays.

## Summary of the Invention

A first aspect provides a display device comprising:

> a set of electromagnetic radiation (EMR) sources, including a first EMR source and a second EMR source, arranged to emit EMR having a set of wavelengths, including a first wavelength and a second wavelength, respectively;
> a filter assembly comprising a set of notch filters, including a first notch filter and a second notch filter, arranged to respectively reflect the emitted EMR having the set of wavelengths, including the first wavelength and the second wavelength, incident thereupon along an optical axis towards a viewer; and
> wherein the filter assembly is arranged to transmit incident external EMR, having a predetermined wavelength range, therethough along the optical axis towards the viewer, wherein the external EMR is transmitted, at least in part, through the filter assembly.

A second aspect provides a head-up display device, for example a helmet or glasses, or a vehicle comprising the display device according to the first aspect.

A third aspect provides method of displaying an image in a display device according to the first aspect or a head-up display device according to the second aspect, the method comprising emitting the EMR, corresponding to the image, having the set of wavelengths, including the first wavelength and the second wavelength, respectively, incident upon the filter assembly comprising the set of notch filters, including the first notch filter and the second notch filter.

A fourth aspect provides use of a notch filter in a head-up display device.

## Detailed Description of the Invention

According to the present invention there is provided a display device, as set forth in the appended claims. Also provided is a head-up display device, a method of displaying an image on a display device and use of a notch filter in a head-up display device. Other features of the invention will be apparent from the dependent claims, and the description that follows.

The first aspect provides a display device, for example for a head-up display, comprising:

a set of electromagnetic radiation (EMR) sources, including a first EMR source and a second EMR source, arranged to emit EMR having a set of wavelengths, including a first wavelength and a second wavelength, respectively, for example of an image to be displayed;

a filter assembly comprising a set of notch filters, including a first notch filter and a second notch filter, arranged to respectively reflect the emitted EMR having the set of wavelengths, including the first wavelength and the second wavelength, incident thereupon along an optical axis towards a viewer, for example along a line of sight (LOS) of the viewer; and

wherein the filter assembly is arranged to transmit incident external EMR, for example of an external scene, having a predetermined wavelength range, therethough along the optical axis towards the viewer, wherein the external EMR is transmitted, at least in part, through the filter assembly.

In this way, the first notch filter and the second notch filter respectively reflect the EMR having the first wavelength and the second wavelength (i.e. non-monochromatic EMR) towards the viewer along the optical axis, for example a line of sight (LOS) of the viewer. In this way, the display device displays an image comprising the first wavelength and the second wavelength in the LOS of the viewer, while allowing the viewer to simultaneously view an external scene provided by the external EMR, for example through an optical window. In this way, a visual 'richness' of the displayed image is enhanced. In other words, an information content of the displayed image may be enhanced by the non-monochromatic EMR, which may be better distinguished from the external scene, for example, and/or features of the displayed images may be mutually better distinguished. For example, important alerts or warnings can be distinguished by a different colour. Furthermore, use of the first notch filter and the second notch filter may reduce tint of the external scene, as perceived by the viewer and as described below in more detail. That is, a colour balance of the external scene is improved compared with a conventional HUD, for example. For example, objects in the external scene may be less imperceptible and/or less poorly distinguished, resulting in reduced risk, danger or threat to the viewer and/or improving situational awareness of the viewer, for example a pilot, a navigator, a lookout, or a driver.

In addition, the first notch filter and/or the second notch filter may attenuate the first wavelength and/or the second wavelength included in the external EMR. In this way, dazzling of the viewer by hostile EMR, for example a laser pointer, may be reduced.

*EMR sources*

The display device comprises the set of electromagnetic radiation (EMR) sources, including the first EMR source and the second EMR source, arranged to emit EMR having the set of wavelengths, including the first wavelength and the second wavelength, respectively, for example of the image to be displayed;

In one example, the set of EMR sources includes M EMR sources, including the first EMR source and the second EMR source, wherein M is a natural number greater than or equal to 2, for example 2, 3, 4, 5, 6, 7, 8, 9, 10 or more. In one preferred example, the set of EMR sources includes three EMR sources, for example only three EMR sources. As described below, in one preferred example, the first wavelength, the second wavelength and a third wavelength are respectively in a range from about 700 nm to about 635 nm (i.e. red), in a range from about 560 nm to about 520 nm (i.e. green) and in a range from about 490 nm to about 450 nm (i.e. blue). In this way, a full colour image may be displayed by the display device.

In one example, the first EMR source comprises and/or is a laser, for example a gas laser as a chemical laser or an excimer laser, a solid - state laser, a fibre laser, a photonic crystal laser, a semiconductor laser, or a free - electron laser.

Generally, lasers are distinguished from other light sources by their coherence. Spatial coherence is typically expressed through the output being a narrow beam, which is diffraction-limited. Lasers are characterised according to their wavelengths in a vacuum. Most 'single wavelength' (i.e. monochromatic) lasers produce radiation in several modes, having slightly differing frequencies (wavelengths) often not in one polarization. Although temporal coherence implies monochromaticity, there are lasers that emit a broad spectrum of light or emit different wavelengths of light simultaneously. Some lasers are not single spatial mode and have light beams that diverge more than is required by the diffraction limit.

Preferably, the first EMR source comprises and/or is a semiconductor laser (also known as a diode laser or a laser diode) and/or a fibre laser. More preferably, the first EMR source comprises and/or is a semiconductor laser. Commercial laser diodes emit at wavelengths from 375 nm to 3500 nm. Low to medium power laser diodes are used in laser pointers, laser printers and CD/DVD players and thus readily available at low cost. Fibre lasers are solid-state lasers or laser amplifiers in which light is guided due to total internal reflection in a single mode optical fibre, for example towards the filter assembly. In this way, line of sight from the first EMR source to the filter assembly is not required, since the optical fibre may curve, for example, around a helmet such as from behind the viewer's head. Additionally and/or alternatively, EMR emitted by a semiconductor laser may be similarly guided around a helmet such as from behind the viewer's head, using a passive optical fibre.

In one example, the second EMR is as described with respect to the first EMR source.

It should be understood that the first wavelength and the second wavelength are different.

In one example, the set of wavelengths, including the first wavelength and the second wavelength, is in a range from 100 nm to 1100 nm, preferably in a range from about 400 nm to about 700 nm i.e. in the visible range. In one example, the first wavelength is in a range from about 700 nm to about 635 nm (i.e. red) or from about 560 nm to about 520 nm (i.e. green) or from about 490 nm to about 450 nm (i.e. blue). In one example, the second wavelength is in a range from about 700 nm to about 635 nm (i.e. red) or from about 560 nm to about 520 nm (i.e. green) or from about 490 nm to about 450 nm (i.e. blue), wherein the first wavelength and the second wavelength are in different ranges.

In one example, the set of wavelengths includes N wavelengths, including the first wavelength and the second wavelength, wherein N is a natural number greater than or equal to 2, for example 2, 3, 4, 5, 6, 7, 8, 9, 10 or more. In one example, N is equal to M. In one preferred example, the set of wavelengths includes three wavelengths, for example only three wavelengths.

In one preferred example, the set of electromagnetic EMR sources includes a third EMR source, arranged to emit EMR having a third wavelength included in the set of wavelengths.

In one example, third EMR is as described with respect to the first EMR source.

In one preferred example, the third wavelength is in a range from about 700 nm to about 635 nm (i.e. red) or from about 560 nm to about 520 nm (i.e. green) or from about 490 nm to about 450 nm (i.e. blue), wherein the first wavelength, the second wavelength and the third wavelength are in different ranges. In this way, a full colour image may be displayed by the display device.

*Filter assembly*

The display device comprises the filter assembly comprising the set of notch filters, including the first notch filter and the second notch filter, arranged to respectively reflect the emitted EMR having the set of wavelengths, including the first wavelength and the second wavelength, incident thereupon along the optical axis towards the viewer.

That is, the first notch filter reflects the emitted EMR, having the first wavelength, incident thereupon along the optical axis towards the viewer and the second notch filter reflects the emitted EMR, having the second wavelength, incident thereupon along the optical axis towards the viewer.

It should be understood that the first notch filter and the second notch filter are different. That is, the first notch filter and the second notch filter are arranged to respectively reflect different wavelengths of EMR. The first notch filter and the second notch filter are described below, in more detail.

In one example, the set of notch filters includes P notch filters, including the first notch filter and the second notch filter, wherein P is a natural number greater than or equal to 2, for example 2, 3, 4, 5, 6, 7, 8, 9, 10 or more. In one preferred example, the set of notch filters includes three notch filters.

In one example, the set of notch filters is arranged to respectively reflect a set of wavelength ranges, including a first wavelength range and a second wavelength range, respectively including the first wavelength and the second wavelength, incident thereupon along an optical axis towards the viewer.

In one example, the first wavelength range and/or the second wavelength range is at most 30 nm, preferably at most 20 nm, more preferably at most 10 nm. In this way, attenuation of the external EMR is reduced, thereby improving a colour balance of the external EMR and/or reducing loss of the external EMR.

In one example, M = N = P. In one preferred example, M = N = P = 3.

*Third notch filter*

In one example, the set of notch filters includes a third notch filter arranged to reflect the emitted EMR having the third wavelength, incident thereupon along an optical axis towards the viewer. The third notch filter may be as described with respect to the first notch filter and/or the second notch filter. In this way, a colour balance of the external scene may be improved, for example compared with a conventional HUD. Particularly, by including three notch filters (i.e. the first notch filter, the second notch filter and the third notch filter), the colour balance of the external scene may be improved, for example compared with a conventional HUD, while only a single wavelength of emitted EMR, for example the first wavelength or the second wavelength) is required to display the image. That is, the colour balance of the external scene may be improved, for example compared with a conventional HUD, even for a monochromatic display. For example, colour balance of the external scene may depend on the relative depths (i.e. reflectivities) of the filters. By controlling the powers (i.e. intensities) of the emitted EMR, with an understanding of the relative reflectivities of the filters, the colour balance of the display may be controlled.

Hence:

An aspect provides a display device, for example for a head-up display, comprising:

a set of electromagnetic radiation (EMR) sources, including a first EMR source, arranged to emit EMR having a set of wavelengths, including a first wavelength, for example of an image to be displayed;
a filter assembly comprising a set of notch filters, including a first notch filter, a second notch filter and a third notch filter, wherein at least one of the notch filters of the set thereof is arranged to reflect the emitted EMR having the set of wavelengths, including the first wavelength, incident thereupon along an optical axis towards a viewer, for example along a line of sight (LOS) of the viewer; and

wherein the filter assembly is arranged to transmit incident external EMR, for example of an external scene, having a predetermined wavelength range, therethough along the optical axis towards the viewer, wherein the external EMR is transmitted, at least in part, through the filter assembly.

In one example, the set of electromagnetic EMR sources includes a third EMR source, arranged to emit EMR having a third wavelength included in the set of wavelengths; and wherein the set of notch filters includes a third notch filter arranged to reflect the emitted EMR having the third wavelength, incident thereupon along an optical axis towards the viewer.

In this way, a full colour image may be displayed by the display device. Additionally and/or alternatively, in this way, a colour balance of the external scene may be improved, for example compared with a conventional HUD.

In one example, the set of notch filters is arranged to respectively reflect the set of wavelength ranges, including a third wavelength range including the third wavelength, incident thereupon along the optical axis towards the viewer.

In one example, the third wavelength range is at most 30 nm, preferably at most 20 nm, more preferably at most 10 nm. In this way, attenuation of the external EMR is reduced, thereby improving a colour balance of the external EMR, as discussed above in more detail.

*Optical density*

In one example, the first notch filter and/or the second notch filter has an optical density of at least 1, preferably at least 2, more preferably at least 3. That is, the first notch filter and/or the second notch filter attenuates the external EMR having the first wavelength and/or the second wavelength respectively incident thereupon and transmitted therethrough to at most 10%, at most 1% and at most 0.1% of the incident power, respectively while reflecting the emitted EMR, having the first wavelength and/or the second wavelength respectively, by at least 90%, at least 99% and at least 99.9% of the incident power, respectively. However, the first notch filter and/or the second notch filter effectively reflects the emitted EMR having the first wavelength and/or the second wavelength respectively incident thereupon and reflected thereby. In other words, the first notch filter is relatively opaque to the external EMR having the first wavelength while being relatively reflective to the emitted EMR having the first wavelength.

In one example, the optical densities of the first notch filter and of the second notch filter are selected to balance a colour (for example a chrominance and/or a chroma, a luminance and/or a luma, a hue, a tint, a brightness, and/or a saturation) of the reflected EMR having the first wavelength and the second wavelength, respectively, and/or preferably to balance a colour (for example a chrominance and/or a chroma, a luminance and/or a luma, a hue, a tint, a brightness, and/or a saturation) of the external EMR transmitted through the filter assembly. Colour balancing of the emitted EMR is preferably achieved by controlling the intensities, for example the relative intensities, of the set of wavelengths, including the first wavelength and the second wavelength, as described below in more detail.

In one example, the first notch filter and/or the second notch filter is arranged between the EMR source and an optical window. For example, the first notch filter and/or the second notch filter (i.e. the filter assembly) may be provided on an inner surface of an optical window, wherein the inner surface is relatively more proximal the viewer's eyes, in use.

In one example, the first notch filter is arranged at a first oblique angle to the optical axis and the first notch filter is arranged at a complementary oblique angle to the emitted EMR having the first wavelength. For example, the first notch filter may be arranged at an angle of 45° to the optical axis and arranged at an angle of 45° to the emitted EMR having the first wavelength, such that the emitted EMR having the first wavelength is reflected by the first notch filter coincident with (i.e. along) the optical axis. In one example, the first oblique angle is in a range from 15° to 75°, preferably in a range from 30° to 60°, more preferably in a range from 40° to 50°, for example 45°. In one example, the complementary angle is in a range from 75° to 15°, preferably in a range from 60° to 30°, more preferably in a range from 50° to 40°, for example 45°. The second notch filter and/or the third notch filter may be arranged similarly to the first notch filter, mutatis mutandis.

A blue shift or a red shift of the emitted EMR having the first wavelength may result from reflection by the first notch filter, as described below. This may apply similarly for the second notch filter and/or the third notch filter.

Particularly, a reflection wavelength of the first notch filter will be blue shifted as an angle of incidence of the emitted EMR having the first wavelength increases away from a normal thereto. Therefore, a normal incidence notch filter design requires an equivalent red-shift to account for the reflection angle. Expressing the first oblique angle $\theta$ in radians, the required red shift is given by $\lambda(0) - \lambda(\theta)$, where $\lambda(\theta)$ is given according to Equation 1:

$$\lambda(\theta) = \lambda(0) \sqrt{1 - \left(\frac{\sin(\theta)}{n_{eff}}\right)^2}$$

where $n_{eff}$ is the effective refractive index, $\lambda(0)$ is the first wavelength, incident normally to the first notch filter and $\lambda(\theta)$ is the wavelength at the angle of incidence.

The first notch filter may be arranged at the first oblique angle $\theta$ to the optical axis. Therefore, the nominal wavelength needs to be red shifted by a value $\lambda(0) - \lambda(\theta)$ so as to counter the blue shift determined according to Equation 1.

Table 1 shows red shifts calculated from Equation 1 as a function of $\theta$ for $\lambda(0) = 532$ nm and $n_{eff} = 1.5$.

Table 1: red shifts calculated from Equation 1 as a function of $\theta$ for $\lambda(0) = 532$ nm and $n_{eff} = 1.5$.

| $\theta$ | Red shift (nm) |
|---|---|
| -80° | 130.7 |
| -70° | 117.3 |
| -60° | 97.6 |
| -50° | 74.6 |
| -40° | 51.3 |
| -30° | 30.4 |
| -20° | 14.0 |
| -10° | 3.6 |
| 0° | 0.0 |
| 10° | 3.6 |
| 20° | 14.0 |
| 30° | 30.4 |
| 40° | 51.3 |
| 50° | 74.6 |
| 60° | 97.6 |
| 70° | 117.3 |
| 80° | 130.7 |

In one example, a difference between a red shifted wavelength of the external EMR and the first wavelength is in a range from 0.1 nm to 150 nm, preferably in a range from 1 nm to 100 nm, more preferably in a range from 10 nm to 50 nm, most preferably in a range from 14 nm to 31 nm. For example, for the most preferred range of 14 nm to 31 nm, reflection of hostile light is provided for a cone of incidence (i.e. a range of angles of incidence) having a cone angle of approximately 20° to 40°. For some applications, smaller cone angles may be suitable for example in a range from 5° to 30° or less, for example in a range from 5° to 15°.

*Optical window*

In one example, the display device comprises an optical window, arranged to transmit the incident external EMR, having the predetermined wavelength range, therethough along the optical axis towards the viewer, wherein the external EMR is transmitted, at least in part, through the filter assembly.

It should be understood that the external EMR arises from an illuminated object, for example, viewed by the viewer, for example a scene such as a road or street, a runway, a landscape, a seascape, an urban area, a rural area, a residential, commercial or industrial area, or the like.

In one example, the optical window has an optical density of at most 2, preferably at most 1, more preferably at most 0.1. That is, the optical window attenuates the external EMR incident thereupon and transmitted therethrough by at most 10%, at most 1% or at most 0.1% of the incident power, respectively. In other words, the optical window is transparent or substantially transparent to the external EMR, such that the viewer may view an external scene, for example.

In one example, the optical window is curved (i.e. non-planar), for example curved in one, two or three orthogonal directions.

In one example, the filter assembly is provided on and/or contacting and/or confronting a surface, for example on a curved surface, of the optical window, as described previously. Projection of the emitted EMR thereupon may depend, at least in part, on curvature of the curved surface.

In one example, the predetermined wavelength range is from 100 nm to 1100 nm, preferably from about 400 nm to about 700 nm i.e. in the visible range. It should be understood that the notch filter assembly attenuates the set of wavelengths of the transmitted external EMR.

In one example, the optical window comprises a coating, for example a reflective coating, a polarising coating and/or a tinted coating. In one example, controller is configured to control intensities of the set of wavelengths according to properties, for example coatings, of the optical window.

*Conformable film*

In one example, the filter assembly is curved, for example curved in one, two or three orthogonal directions, for example to conform with a shape of the optical window. For example, the filter assembly may be provided as a conformable film. In one example, the filter assembly is provided as a polymeric, conformable film, as described below in more detail. In this way, the filter assembly may conform with curvatures of windscreens, lenses and/or visors. In this way, the filter assembly may be provided on existing windscreens, lenses and/or visors, for example to provide a retrofit HUD.

The advantages of this film are multiple:

- It is produced by exposing a polymer to a laser induced interference pattern which is inherently low cost. In contrast, conventional thin film filters typically require vacuum deposition of many layers to achieve a required performance, which is costly and/or complex. This solves the production cost problem.

- The polymer is flexible and can have its shape adapted to meet the projection requirement. This also solves the production cost problem.
- Reflection of multiple wavelengths can be produced in a single polymer.
- With matched projection sources the reflection of multiple wavelengths allows colour projection. This solves the monochrome projection problem.
- The external scene, as viewed by the user, can be colour balanced by adjustment of the depth of multiple filters within the spectrum. This solves the colour tint problem.

*Controller*

In one example, the display device comprises a controller configured to control a first intensity (i.e. brightness) of the emitted EMR having the first wavelength and/or a second intensity of the emitted EMR having the second wavelength. In this way, the intensities of the first wavelength and the second wavelength may be mutually balanced, for example in conjunction with the known or predetermined reflectivities of the first notch filter and/or the second notch filter at the first wavelength and/or the second wavelength.

In one example, the controller is configured to control the first intensity of the emitted EMR having the first wavelength based, at least in part, on the external EMR and/or the emitted EMR having the second wavelength. In this way, the first intensity may be controlled, for example increased or decreased, according to an intensity of the external EMR, for example of the external EMR having the first wavelength. In other words, a brightness of the displayed image can be adjusted according to the external scene. Hence, in daylight example, the first intensity may be increased. Conversely, at night, for example, the first intensity may be decreased. In this way, the brightness of the displayed image may be more compatible with that the external scene. In one example, the controller is configured to control a third intensity of the emitted EMR having the third wavelength. In this way, full colour balancing with the external scene may be provided. Additionally and/or alternatively, display dazzling to reduce situational awareness of external scene may be avoided.

In one example, the controller is configured to control a chrominance and/or a chroma, a luminance and/or a luma, a hue, a tint, a brightness, a saturation and/or an intensity of the emitted EMR having the set of wavelengths, for example based, at least in part, on the external EMR and/or the emitted EMR, for example having different wavelengths of the set of wavelengths.

*Sensors*

In one example, the display device comprises a set of sensors, including a first sensor, arranged to sense an intensity of the external EMR, for example having the first wavelength and/or an overall luminance of the external EMR or the external scene. In one example, set of sensors includes R sensors, including the first sensor arranged to respectively sense intensities of the external EMR of the set of wavelengths. In one example, controller is arranged to control the first intensity of the emitted EMR having the first wavelength based on the sensed intensity of the external EMR having the first wavelength. The controller may be arranged to control the second intensity of the emitted EMR having the second wavelength mutatis mutandis.

*Projection optics*

In one example, the display device comprises projection optics, for example lenses to collimate the emitted EMR with given beam diameters, digital multimirror devices to form the image on the beam and/or lenses so that the image appears to originate at infinity from the perspective of the viewer.

*Stereoscopic image*

In one example, the display device is arranged to display a stereoscopic image, by providing different left eye and right eye images for the viewer. Methods of providing stereoscopic images are known. In this way, an augmented reality image may be provided by the display device, for example.

*Head-up display device*

The second aspect provides a head-up display device, for example a helmet or glasses, or a vehicle comprising the display device according to the first aspect.

In one example, the head-up display device is a fixed mounted head-up display device, for example provided for and/or integrated in a windscreen (also known as windshield) of an aircraft or vehicle. Additionally and/or alternatively, the fixed mounted head-up display device maybe provided between the viewer and the windscreen, for example separately on a dash or console, for example. In one example, the head-up display device is a head-mounted display device, for example a glasses or a goggles head-up display device. In one example, the head-up display device is a helmet-mounted head-up display device, for example a helmet head-up display device. In one example, the head-up display device is provided for and/or integrated in an optical sighting device, for example binoculars, a telescope or a scope.

*Method of displaying an image*

The third aspect provides method of displaying an image in a display device according to the first aspect or a head-up display device according to the second aspect, the method comprising emitting the EMR, corresponding to the image, having the set of wavelengths, including the first wavelength and the second wavelength, respectively, incident upon the filter assembly comprising the set of notch filters, including the first notch filter and the second notch filter, for example so that the set of notch filters reflect the emitted EMR towards the viewer. In this way, the non-monochromatic image may be displayed for the viewer while simultaneously allowing the viewer an external scene.

The method may include any of the steps described with respect to the first aspect and/or the second aspect.

In one example, the method comprises controlling the first intensity of the emitted EMR having the first wavelength based, at least in part, on the external EMR and/or the emitted EMR having the second wavelength.

*Use of a notch filter*

The fourth aspect provides use of a notch filter in a head-up display device.

The notch filter and/or the head-up display device may be as described with respect to the first aspect and/or the second aspect

**Brief description of the drawings**

For a better understanding of the invention, and to show how exemplary embodiments of the same may be brought into effect, reference will be made, by way of example only, to the accompanying diagrammatic Figures, in which:

Figure 1 schematically depicts a display device according to an exemplary embodiment;

Figure 2 schematically depicts a method of displaying an image in a display device according to an exemplary embodiment;

Figure 3 schematically depicts a filter assembly for a display device according to an exemplary embodiment;

Figure 4 schematically depicts a method of providing a filter assembly for a display device according to an exemplary embodiment;

Figure 5 schematically depicts transmission characteristics of a filter assembly for a display device according to an exemplary embodiment;

Figure 6 schematically depicts transmission characteristics of a filter assembly for a display device according to an exemplary embodiment; and

Figure 7 is a photograph of glasses including a filter assembly for a device according to an exemplary embodiment.

**Detailed Description of the Drawings**

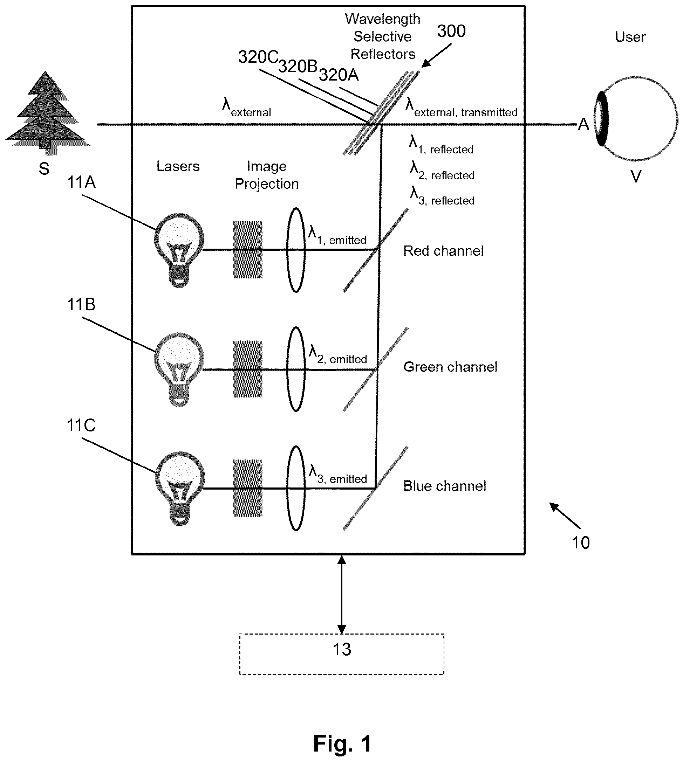

Figure 1 schematically depicts a display device 10 according to an exemplary embodiment.

The display device 10, for example for a head-up display, comprises:

a set of electromagnetic radiation (EMR) sources 11, including a first EMR source 11A and a second EMR source 11B, arranged to emit EMR having a set of wavelengths, including a first wavelength $\lambda_1$ and a second wavelength $\lambda_2$, respectively, for example of an image to be displayed;

a filter assembly 300 comprising a set of notch filters, including a first notch filter 320 and a second notch filter 320A, arranged to respectively reflect the emitted EMR having the set of wavelengths, including the first wavelength $\lambda_1$ and the second wavelength $\lambda_2$, incident thereupon along an optical axis $A$ towards a viewer $V$, for example along a line of sight (LOS) of the viewer; and

wherein the filter assembly 300 is arranged to transmit incident external EMR $\lambda_{external}$, for example of an external scene S, having a predetermined wavelength range, therethough along the optical axis $A$ towards the viewer $V$, wherein the external EMR is transmitted, at least in part, through the filter assembly.

Briefly, the display device 10 includes three EMR sources 11A, 11B and 11C, respectively emitting red, green and blue light, having wavelengths $\lambda_1$, $\lambda_2$ and $\lambda_3$ respectively, for providing the image to be displayed to the viewer $V$. The display device 10 includes three notch filters 320A, 320A and 320A, which respectively reflect the red, green and blue light emitted by the three EMR sources 11A, 11B and 11C. Furthermore, the three notch filters 320A, 320A and 320A transmit the external EMR $\lambda_{external}$. Particularly, the first notch filter 320A transmits green and blue light, having wavelengths $\lambda_2$ and $\lambda_3$ respectively, included in the external EMR and reflects emitted red light, having wavelength $\lambda_1$, The second notch filter 320A and the third notch filter 320A transmit and reflect similarly to the first notch filter 320A, mutatis mutandis. In this way, the viewer $V$ may view the full colour image provided by the red, green and blue light and the external scene in the same field of view (i.e. from the same viewpoint, along the LOS, along the optical axis $A$). The external EMR transmitted through the filter assembly 300 is indicated as $\lambda_{external,transmitted}$. The red, green and blue light, having wavelengths $\lambda_1$, $\lambda_2$ and $\lambda_3$, emitted by the three EMR sources 11A, 11B and 11C respectively are respectively indicated as $\lambda_{1,emitted}$, $\lambda_{2,emitted}$ and $\lambda_{3,emitted}$. The red, green and blue light,

having wavelengths $\lambda_1$, $\lambda_2$ and $\lambda_3$, reflected by the three notch filters 320A, 320A and 320A respectively, are respectively indicated as $\lambda_{1,reflected}$, $\lambda_{2,reflected}$ and $\lambda_{3,reflected}$.

In other words, three laser sources (i.e. the three EMR sources 11A, 11B and 11C) with associated projection optics generate red, green and blue image channels; these are combined using wavelength selective filters (each reflecting a single wavelength as indicated). Finally, the three image channels are overlaid on the external scene by the wavelength selective filter (i.e. the filter assembly 300) including reflection of the three channels. Use of laser sources allows the reflection spectrum of the filters to remain narrow, thereby minimising the light lost in transmission from the scene to the eye and any residual colour tint, while maintaining a strong reflection of the displayed light to reach the eye. Conversely, the reflection spectrum of the filters may be broadened, thereby allowing reflection of emitted EMR having wider wavength ranges and/or to accommodate for a change in angle of viewing (i.e. the oblique angle).

The projection optics for example could include lenses to collimate the laser output with given beam diameters, digital multimirror devices to form the image on the beam and more lenses so that the image appears to originate at infinity from the perspective of the user.

In this example, the set of EMR sources includes three EMR sources, including the first EMR source 11A, the second EMR source 11B and a third EMR source 11C, arranged to emit EMR having the set of wavelengths, including the first wavelength $\lambda_1$, the second wavelength $\lambda_2$ and a third wavelength $\lambda_3$ respectively, for example of an image to be displayed. In this example, the first EMR source 11A, the second EMR source 11B and the third EMR source 11C are semiconductor lasers.

In this example, the set of wavelengths, including the first wavelength and the second wavelength, is in a range from about 400 nm to about 700 nm i.e. in the visible range. In this example, the first wavelength $\lambda_1$ is in a range from about 700 nm to about 635 nm (i.e. red). In this example, the second wavelength $\lambda_2$ is in a range from about 560 nm to about 520 nm (i.e. green). In this example, the third wavelength $\lambda_3$ is in a range from about 490 nm to about 450 nm (i.e. blue). In this way, a full colour image may be displayed on the display device 10.

In this example, the set of notch filters includes three notch filters, including the first notch filter 320A, the second notch filter 320A and a third notch filter 320A, arranged to respectively reflect a set of wavelength ranges, including a first wavelength range, a second wavelength range and a third wavelength range, respectively including the first wavelength $\lambda_1$, the second wavelength $\lambda_2$ and the third wavelength $\lambda_3$, incident thereupon along an optical axis towards the viewer.

In this example, the first wavelength range, the second wavelength range and the third wavelength range are each at most 10 nm wide.

In this example, the first notch filter 320A, the second notch filter 320A and the third notch filter 320A each have an optical density of preferably at least 2, more preferably at least 3.

In this example, the first notch filter 320A is arranged at an angle of about 45° to the optical axis and the first notch filter is arranged at an angle of about 45° to the emitted EMR having the first wavelength $\lambda_1$.

Optionally, the display device 10 comprises a controller 13 configured to control a first intensity (i.e. brightness) of the emitted EMR having the first wavelength $\lambda_1$ and/or a second intensity of the emitted EMR having the second wavelength $\lambda_2$.

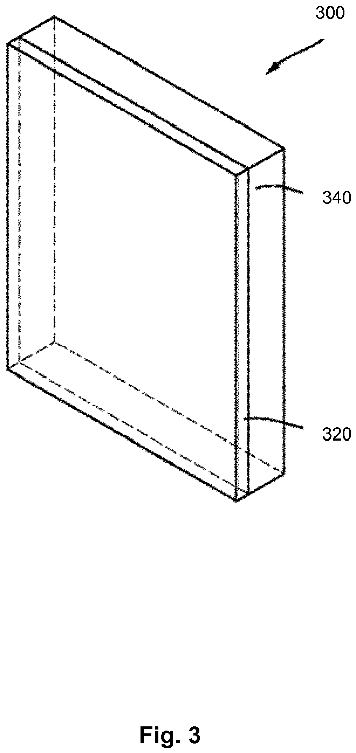

In this example, the filter assembly 300 is provided by a conformable photosensitive (e.g. polymeric) film, as described below with respect to Figures 3 to 7.

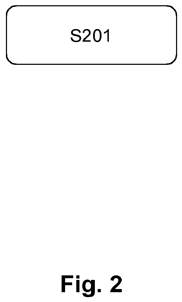

Figure 2 schematically depicts a method of displaying an image in a display device 10 according to an exemplary embodiment.

At S201, EMR, corresponding to the image, having the set of wavelengths, including the first wavelength and the second wavelength, respectively, is emitted incident upon the filter assembly 300 comprising the set of notch filters, including the first notch filter and the second notch filter.

The method may include any of the steps described herein.

Optionally, the method comprises controlling the first intensity of the emitted EMR having the first wavelength based, at least in part, on the external EMR and/or the emitted EMR having the second wavelength.

Figure 3 schematically depicts the filter assembly 300 for the display device 10 according to an exemplary embodiment.

A first notch filter 320, for example the first notch filer 320A, the second notch filter 320B or the third notch filter 320C, is provided as a layer applied to a first face of a substrate 340, for example an optical window, to provide the filter assembly 300. The substrate 340 is substantially transmissive of visible light (for example it may have a visible light transmission (VLT%) of around 90% of normally incident light) and may be formed for example from a glass or a plastics material such as polycarbonate.

The first notch filter 320 is an interference filter formed by holographically exposing a photosensitive film with a plurality of lasers having a set of predetermined wavelengths within a selected wavelength band of bandwidth 10 nm or less.

Conformable photosensitive (e.g. polymeric) films for use in exemplary embodiments of the present invention will be known to a person skilled in the art, and the present invention is not necessarily intended to be limited in this regard. Such photosensitive polymeric films are provided having varying degrees of inherent visible light transmission (VLT), ranging from less than 70% (and possibly, therefore, having a coloured tinge) up to 99% or more (and being substantially colourless and transparent). In respect of the present invention, suffice it to say that a photosensitive flexible/conformable (e.g. polymeric) film is selected having an inherent VLT of, for example, at least 85%. The film typically has a thickness of 1 to 100 micrometers. Thinner, currently known, films may not achieve useful optical densities. Indeed, in respect of currently known photosensitive polymeric films, the degree to which a selected radiation wavelength can be blocked (i.e. the effectiveness of a filter region formed therein) is determined by the thickness and refractive modulation index of the film and, also, by the optical design. However, for head-up display applications, this may be less important if protection from external laser threats is not a key function, for example. For head-up display applications, a lower reflection may be mitigated by increasing the power of the EMR sources, for example. Thus, the filter region thickness is ideally matched to the application and the potential power of the source from which protection is required (which may be dictated, at least to some extent, by the minimum distance from the target platform the laser threat may realistically be located and this, in turn, is dictated by application). In general, thicker films and films with higher refractive modulation indices would be selected if it were required to provide protection from higher power radiation sources or to provide greater angular coverage, but this might then have a detrimental effect on the inherent VLT of the film, so a balance is selected to meet the needs of a specific application.

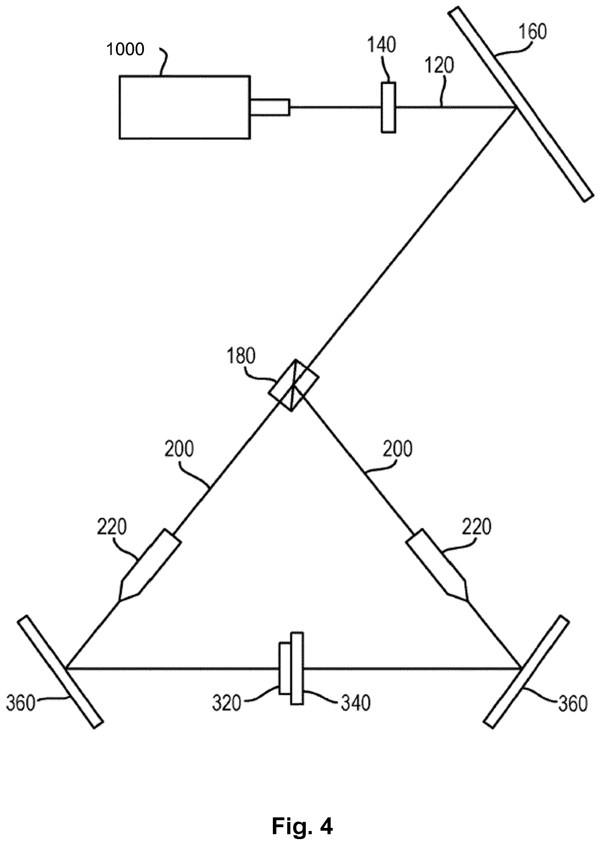

Thus, once the film has been selected, the required holographic exposure thereof is effected to form the filter regions of a required notch filter region to be provided thereon, as described below with reference to Figure 4.

Figure 4 schematically depicts a method of providing the filter assembly 300 for the display device 10 according to an exemplary embodiment.

Particularly, as shown in Figure 4, distinct filter regions defining a notch filter region of a predetermined bandwidth (for example 5 - 10 nm) may be formed by exposing the film to the intersection of two counter propagating laser beams for each of a set of laser wavelengths within the selected wavelength band having a selected spectral bandwidth. Each laser 1000 (of a wavelength within the selected spectral bandwidth) produces a laser beam 120 which is controlled by a shutter 140. The laser beam 120 is directed by a mirror 160 into a beam splitter 180 wherein the beam is divided into equal beam segments 200. Each beam segment 200 passes through a microscope objective 220 and is then reflected by a respective mirror 360 onto a photosensitive polymer film 320 provided on the substrate 340. Other coating materials (not shown) may be provided between the microscope objective 220 and the mirror 360 to, for example, focus or diverge the respective beam segments 200, as required. Furthermore, masking or other limiting techniques may be utilised to limit the extent or thickness to which the film is exposed to the beam segments 200, as will be understood by a person skilled in the art. As a specific (non limiting) example, if it is required to provide a notch filter region of bandwidth 5 nm around 520 nm, then a plurality of lasers 1000 may be used to produce the notch filter region of (purely by way of example) 517.5 nm, 518 nm, 518.5 nm, 519 nm, 519.5 nm, 520 nm, 520.5 nm, 521 nm, 521.5 nm, 522 nm and 522.5 nm. The above-described exposure process may be performed consecutively for each of these laser wavelengths or, in other exemplary embodiments, the exposures may be performed substantially simultaneously. Other apparatus for forming a holographic filter region at each specified wavelength is known and could, alternatively, be used.

Once the exposure process has been completed, the resultant hologram can be fixed by, for example, a bleaching process.

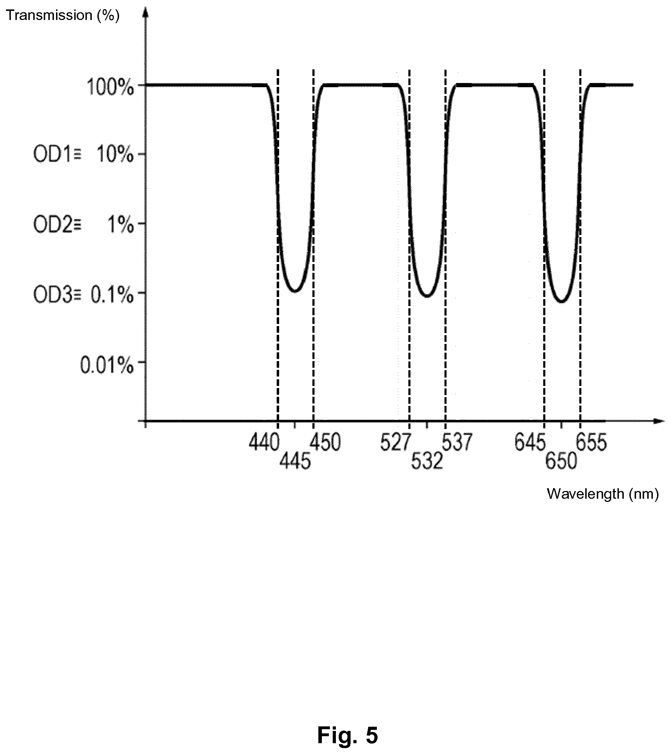

Figure 5 schematically depicts transmission characteristics of the filter assembly 300 for the display device 10 according to an exemplary embodiment.

Particularly, Figure 5 shows the transmission characteristics (which may alternatively be referred to as the transfer function) of visible electromagnetic radiation incident on the first notch filter 320. The transmission intensity relative to incident radiation intensity is shown on the y-axis and the wavelength of the incident radiation is shown on the x-axis.

As can be seen on the plot, across the range of wavelengths the intensity of the transmitted radiation is close to 100% of that which is incident. In general, a VLT% of 90% would be acceptable if 100% were not feasible. If the coating material is for coating an opaque article, for example, such as a part of a military article as described above, a lower VLT is acceptable, for example a VLT% of at most 50%, at most 40%, at most 30 %, at most 20%, at most 10%, at most 5%, at most 1 % or 0%.

There are three distinct notches in the transmission characteristic associated with three wavelength bands. These are in particular a 10 nm band centred on 455 nm, a 10 nm band centred on 532 nm and a 10 nm band centred on 650 nm. In general any three notches from the group consisting of 405 nm, 455 nm, 520 nm, 532 nm, and 650 nm may be selected. Further, notches may be chosen to coincide with any expected laser threat wavelength and/or expected red shift to compensate for blue shift due to the angle of inclination. Still further, the bandwidth may be 5 nm.

At the centre of each of these bands, the intensity of the transmitted radiation is at a minimum and has an optical density of approximately 3, which is equivalent to 0.1 % of the initially incident radiation.

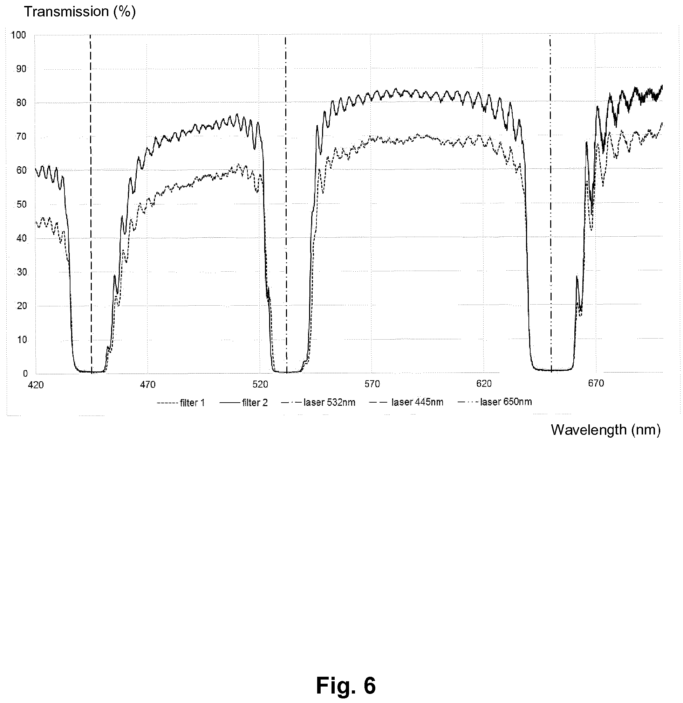

Figure 6 schematically depicts transmission characteristics of the filter assembly 300 for the display device 10 according to an exemplary embodiment.

Particularly, Figure 6 shows the measured transmission characteristics of visible electromagnetic radiation incident on the first notch filter 320. The transmission intensity relative to incident radiation intensity is shown on the y-axis and the wavelength of the incident radiation is shown on the x-axis, as described with reference to Figure 5.

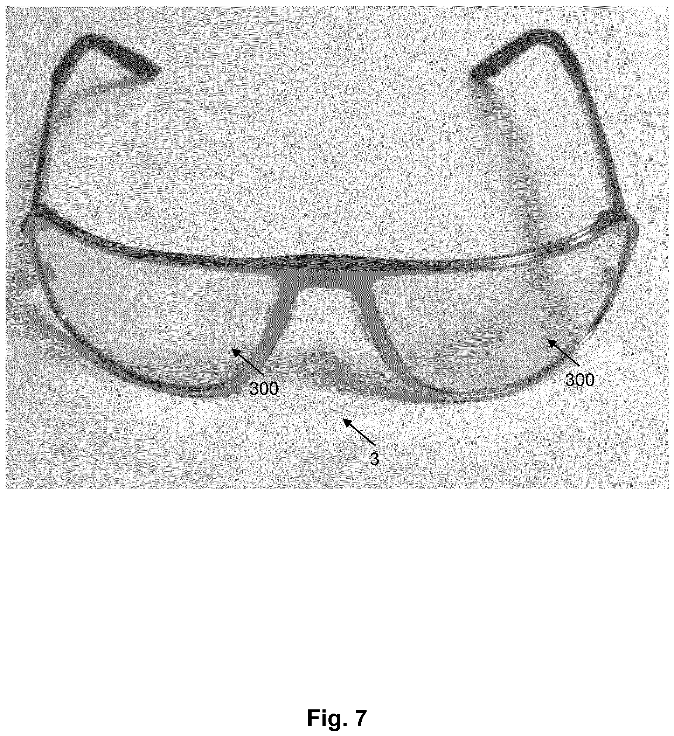

Figure 7 is a photograph of eyewear 3 (i.e. glasses 3) including a filter assembly 300 for a device according to an exemplary embodiment.

Particularly, Figure 7 is a photograph of the filter assembly 300 provided on eyewear 3, particularly on curved lenses thereof. Note the high visible light transmission of the filter assembly 300 and minimal colouration due to the filter assembly 300.

Although a preferred embodiment has been shown and described, it will be appreciated by those skilled in the art that various changes and modifications might be made without departing from the scope of the invention, as defined in the appended claims and as described above.

In summary, a display device is provided, for example for a head-up display. The display device enables full colour images to be provided to the viewer, in the line of sight of an external scene. By controlling intensities of the full colour images, colour and/or intensity balancing with the external scene may be provided. Using filter assemblies provided as conformable films, curved display devices may be provided.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

**Claims**

1. A display device comprising:

    a set of electromagnetic radiation (EMR) sources, including a first EMR source and a second EMR source, arranged to emit EMR having a set of wavelengths, including a first wavelength and a second wavelength, respectively;
    a filter assembly comprising a set of notch filters, including a first notch filter and a second notch filter, arranged to respectively reflect the emitted EMR having the set of wavelengths, including the first wavelength and the second wavelength, incident thereupon along an optical axis towards a viewer; and
    wherein the filter assembly is arranged to transmit incident external EMR, having a predetermined wavelength range, therethough along the optical axis towards the viewer, wherein the external EMR is transmitted, at least in part, through the filter assembly.

2. The display device according to claim 1, wherein the set of notch filters is arranged to respectively reflect a set of wavelength ranges, including a first wavelength range and a second wavelength range, respectively including the first wavelength and the second wavelength, incident thereupon along an optical axis towards the viewer.

3. The display device according to claim 2, wherein the first wavelength range and/or the second wavelength range is at most 30 nm, preferably at most 20 nm, more preferably at most 10 nm.

4. The display device according to any previous claim, wherein the display device comprises an optical window and wherein the first notch filter and/or the second notch filter is arranged between the EMR source and the optical window.

5. The display device according to any previous claim, wherein the emitted first EMR is incident on the set of notch filters at a respective set of oblique angles, including a first oblique angle and a second oblique angle, wherein the first oblique angle and/or the second oblique angle is in a range from 5° to 85°, preferably in a range from 15° to 75°, more preferably in a range from 30° to 60°, for example 45°.

6. The display device according to any previous claim, wherein the set of wavelengths, including the first wavelength and the second wavelength, is in a range from 100 nm to 1100 nm, preferably in a range from about 700 nm to about 635 nm, from about 560 nm to about 520 nm and/or from about 490 nm to about 450 nm.

7. The display device according to any previous claim, wherein the first notch filter and/or the second notch filter has an optical density of at least 2.

8. The display device according to any previous claim, wherein the display device comprises a set of sensors, including a first sensor, arranged to sense an intensity of the external EMR.

9. The display device according to any previous claim, wherein the set of electromagnetic EMR sources includes a third EMR source, arranged to emit EMR having a third wavelength included in the set of wavelengths; and

   wherein the set of notch filters includes a third notch filter arranged to reflect the emitted EMR having the third wavelength, incident thereupon along an optical axis towards the viewer.

10. The display device according to any previous claim, comprising a controller configured to control a first intensity of the emitted EMR having the first wavelength and/or a second intensity of the emitted EMR having the second wavelength.

11. The display device according to claim 10, wherein the controller is configured to control the first intensity of the emitted EMR having the first wavelength based, at least in part, on the external EMR and/or the emitted EMR having the second wavelength.

12. The display device according to any previous claim, wherein the filter assembly is curved.

13. A head-up display device, for example a helmet or glasses, or a vehicle comprising the display device according to any of claims 1 to 12.

14. A method of displaying an image in a display device according to any of claims 1 to 12 or a head-up display device according to claim 13, the method comprising emitting the EMR, corresponding to the image, having the set of wavelengths, including the first wavelength and the second wavelength, respectively, incident upon the filter assembly comprising the set of notch filters, including the first notch filter and the second notch filter.

15. The method according to claim 14, comprising controlling the first intensity of the emitted EMR having the first wavelength based, at least in part, on the external EMR and/or the emitted EMR having the second wavelength.

Wavelength
Selective
Reflectors 300

320C 320B 320A

User

$\lambda_{external}$     $\lambda_{external,\ transmitted}$

A

S

$\lambda_{1,\ reflected}$

$\lambda_{2,\ reflected}$

$\lambda_{3,\ reflected}$

V

Lasers    Image
Projection

11A

$\lambda_{1,\ emitted}$

Red channel

11B

$\lambda_{2,\ emitted}$

Green channel

11C

$\lambda_{3,\ emitted}$

Blue channel

10

13

Fig. 1

S201

**Fig. 2**

300

340

320

**Fig. 3**

**Fig. 4**

Fig. 5

**Fig. 6**

**Fig. 7**

Europäisches
Patentamt

European
Patent Office

Office européen
des brevets

# EUROPEAN SEARCH REPORT

Application Number

EP 18 27 5181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/341965 A1 (SAIGO KATSUO [JP] ET AL) 24 November 2016 (2016-11-24) * paragraphs [0028] - [0045]; figures 2, 7 * | 1-15 | INV. G02B27/01 |
| X | US 2017/329139 A1 (SHEARMAN RYAN T [US] ET AL) 16 November 2017 (2017-11-16) * paragraphs [0009], [0011], [0022], [0042], [0056]; figures 1A, 4 * | 1-15 | |
| X | DE 10 2008 004631 A1 (BOSCH GMBH ROBERT [DE]) 23 July 2009 (2009-07-23) * paragraphs [0007], [0021] - [0023], [0026]; figures 1, 2, 4 * | 1-15 | |
| X | US 2012/236046 A1 (SUGIYAMA KEIJI [JP] ET AL) 20 September 2012 (2012-09-20) * paragraphs [0062] - [0068], [0138] - [0144], [0147] - [0150]; figures 1, 4, 23, 25, 26, 27A, 27B * | 1-15 | |
| | | | TECHNICAL FIELDS SEARCHED (IPC) G02B |

The present search report has been drawn up for all claims

| Place of search | Date of completion of the search | Examiner |
|---|---|---|
| Munich | 24 May 2019 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 27 5181

This annex lists the patent family members relating to the patent documents cited in  the above-mentioned European search report.
The members are as contained in the European Patent Office EDP file on
The European Patent Office is in no way liable for these particulars which are merely given for the purpose of information.

24-05-2019

| Patent document cited in search report | | Publication date | Patent family member(s) | | | Publication date |
|---|---|---|---|---|---|---|
| US 2016341965 | A1 | 24-11-2016 | CN | 105899997 | A | 24-08-2016 |
| | | | JP | 6450944 | B2 | 16-01-2019 |
| | | | JP | WO2015140859 | A1 | 06-04-2017 |
| | | | US | 2016341965 | A1 | 24-11-2016 |
| | | | WO | 2015140859 | A1 | 24-09-2015 |
| US 2017329139 | A1 | 16-11-2017 | NONE | | | |
| DE 102008004631 | A1 | 23-07-2009 | DE | 102008004631 | A1 | 23-07-2009 |
| | | | WO | 2009089966 | A1 | 23-07-2009 |
| US 2012236046 | A1 | 20-09-2012 | CN | 102640033 | A | 15-08-2012 |
| | | | JP | 5661786 | B2 | 28-01-2015 |
| | | | JP | WO2012042744 | A1 | 03-02-2014 |
| | | | US | 2012236046 | A1 | 20-09-2012 |
| | | | WO | 2012042744 | A1 | 05-04-2012 |

EPO FORM P0459

For more details about this annex : see Official Journal of the European Patent Office, No. 12/82